# EUROPEAN PATENT SPECIFICATION

(11) **EP 3 344 490 B1**
(45) Date of publication and mention of the grant of the patent: **09.10.2019**
(21) Application number: 16756712.2
(22) Date of filing: 25.08.2016
(51) Int. Cl.: B60N 2/20, B60N 2/22, B60N 2/16, B60N 2/30, B60N 2/02

(54) **VEHICLE SEAT ASSEMBLY**
FAHRZEUGSITZANORDNUNG
ENSEMBLE SIÈGE DE VÉHICULE

(30) Priority: 04.09.2015 GB 201515698
(43) Date of publication of application: 11.07.2018
(73) Proprietor: Jaguar Land Rover Limited, Coventry, Warwickshire CV3 4LF (GB)
(72) Inventor: CHATWIN, Andrew, Coventry Warwickshire CV3 4LF (GB); GRIMES, Oliver, Coventry Warwickshire CV3 4LF (GB); BASTIEN, Christophe, Coventry CV3 4LF Warwickshire (GB)
(74) Representative: Westcott, Matthew John George
(86) International application number: PCT/EP2016/070058
(87) International publication number: WO 2017/036907

(56) References cited:
- EP-A1- 2 772 385
- GB-A- 2 373 435
- US-A1- 2013 082 478

## Description

### TECHNICAL FIELD

The present disclosure relates to a vehicle seat assembly. The present disclosure relates particularly, but not exclusively to a vehicle seat assembly; and to a vehicle having a vehicle seat assembly.

### BACKGROUND

A front seat of a vehicle benefits from having adjustments provided to allow for varying size occupants. Typically a modern front seat will have at least track, height and seat back angle mechanisms. As the seat must provide a high degree of structural integrity (to protect the occupant during an impact) the mechanism thus forms part of the structural load path and so must be quite substantial in construction. There is an ongoing need to develop vehicle seats that may meet these criteria. It is against this backdrop that the present invention has been conceived.

EP-A-2772385 discloses a vehicle seat assembly comprising an adjustable backrest support and a height adjustable chassis.

### SUMMARY OF THE INVENTION

Aspects and embodiments of the present invention relate to a vehicle seat assembly; and to a vehicle having a vehicle seat assembly as claimed in the appended claims.

According to the present invention there is provided a vehicle seat assembly comprising: a backrest support comprising a first torsion tube for adjusting a recline angle; and a chassis comprising a second torsion tube for adjusting height rise; wherein the first and second torsion tubes are arranged concentrically about a pivot axis. The first torsion tube may be disposed within the second torsion tube; or the second torsion tube may be disposed within the first torsion tube. The pivot axis is a common axis about which the first and second torsion tubes may rotate. The first and second torsion tubes may be rotated independently of each other about said pivot axis. Thus, the height rise of the chassis and the recline angle of the backrest support may be adjusted independently. The first and second torsion tubes have a common longitudinal axis. This has allowed the vehicle seat assembly to utilise concentric torsion tubes. The first and second torsion tubes may work together to provide increased bending stiffness. At least in certain embodiments, this arrangement helps to conserve space. The resulting kinematic architecture is suitable for mounting composite seat squab assemblies, but could be used with other seat frame configurations.

The angular orientation of the first and second torsion may be adjusted to change the seat geometry. The angular orientation of the first torsion tube is adjustable to adjust recline angle. The angular orientation of the second torsion tube is adjustable to adjust height rise. The angular orientation of the first and second torsion tubes may be adjusted independently to enable the height rise and recline angle to be adjusted independently. At least in certain embodiments, the first torsion tube is disposed inside the second torsion tube. In a variant, the vehicle seat assembly could be configured such that the second torsion tube is disposed inside the first torsion tube.

The chassis may comprise first and second rear mounting arms; and first and second front mounting arms. The front and rear mounting arms may be pivotally mounted to first and second carrier elements. First and second lateral members may be supported by the front and rear mounting arms. The first and second lateral members may support a seat pan.

The first torsion tube may be rotatable about the pivot axis to adjust the recline angle. The first torsion tube may provide a connection between the chassis and the backrest support. The first torsion tube may be rotatable relative to first and second lateral members of the chassis. The backrest support may comprise at least one mounting plate. The first torsion tube may be fixedly connected to said at least one mounting plate. The at least one mounting plate attaches the backrest support to the first torsion tube.

The vehicle seat assembly may include a first actuator for rotating the first torsion tube about said pivot axis. The first actuator may be operated to adjust the angular orientation of the first torsion tube, thereby adjusting the recline angle. A transfer arm may be fixedly mounted to the first torsion tube. The first torsion tube may be controlled in rotation by the transfer arm. The transfer arm may comprise a transfer bracket or other rigid member. The first actuator may drivingly engage the transfer arm. The transfer arm may be connected to a drive rack which engages a first output pinion coupled to the actuator. The drive rack may comprise a toothed quadrant which meshes with the first output pinion. The transfer arm may be attached to one end of the first torsion tube. An additional transfer arm may be attached to the opposite end of the first torsion tube. The transfer arm may comprise a deformable link.

The transfer arm may comprise a load limiting device, such as a deformable link. A deformable link may be disposed in the load-path between the drive rack and the first torsion tube. The deformable link may be configured to deform in a predetermined manner under load. Under seat-back load, the first torsion tube is forced into rotation about the second torsion tube. This force may be resisted initially at the pinion gear coupled to one end of the first torsion tube. Further loading may cause the deformable link to activate and allow continued rotation until the drive rack engages a first chassis frame member. At this point a reaction arm at the opposite end of the first torsion tube may contact a second chassis frame member and the first torsion tube is no longer acting to resist significant torque as both ends now have similar reaction conditions. The outcome of this sequence of events is a tuneable and controlled absorption of energy through managed component deflection. This is of particular importance when considering a seat back assembly which is manufactured in part or substantially from plastic and/or composite materials. However, it will be understood that the vehicle seat assembly according to the present invention is not limited in this respect.

The first actuator may comprise a manually operated actuator, such as a rotary knob or a handle. Alternatively, the first actuator may comprise a first electric motor.

The second torsion tube is rotatable about the pivot axis to adjust the rise height.

The chassis may comprise first and second rear mounting arms. The second torsion tube may be fixedly connected to at least one of said first and second rear mounting arms. Rotating the second torsion tube may adjust the angular orientation of the first and second rear mounting arms, thereby adjusting the rise height. The second torsion tube may be connected to each rear mounting arm.

The vehicle seat assembly may comprise a second actuator for rotating the second torsion tube about the pivot axis. The second actuator may be operated to adjust the angular orientation of the second torsion tube, thereby adjusting the rise height. The angular orientation of the second torsion tube (and therefore of the first and second rear mounting arms) may be adjusted relative to first and second lateral members of the chassis. The second actuator may be mounted to the chassis. The second actuator may be mounted to one of the first and second lateral members.

The second actuator could comprise a manually operated actuator, such as a rotary knob or a handle. Alternatively, the second actuator may comprise a second electric motor.

According to a further aspect of the present invention there is provided a vehicle comprising at least one vehicle seat assembly as described herein.

### BRIEF DESCRIPTION OF THE DRAWINGS

One or more embodiments of the present invention will now be described, by way of example only, with reference to the accompanying Figures, in which:
Figure 1A shows a vehicle seat assembly in accordance with a first embodiment of the present invention;
Figure 1B is a schematic illustration of a vehicle incorporating the vehicle seat assembly shown in Figure 1A;
Figure 2A shows a partially exploded perspective view of the support frame of the vehicle seat assembly shown in Figure 1A;
Figure 2B shows an enlarged view of the support frame shown in Figure 2A;
Figure 2C shows a perspective view of the support frame shown in Figure 2A with the base assembly omitted;
Figure 2D shows a perspective view of the support frame shown in Figure 2C with the height rise actuator omitted;
Figure 3 shows a sectional view through the concentric torsion tubes providing height rise and recline functions
Figure 4A shows a perspective view of a rear shell member of the vehicle seat shown in Figure 1A;
Figure 4B shows the backrest support with the rear shell member shown in Figure 4A omitted;
Figure 5 shows an enlarged view of the support frame shown in Figure 2 showing a deformable link;
Figure 6 shows a perspective view of the mounting arrangement of the backrest support to the seat chassis;
Figure 7 shows an exploded view of the mounting arrangement shown in Figure 6; and
Figure 8 shows a perspective view of the mounting arrangement with the deformable link in a deformed condition.

### DETAILED DESCRIPTION

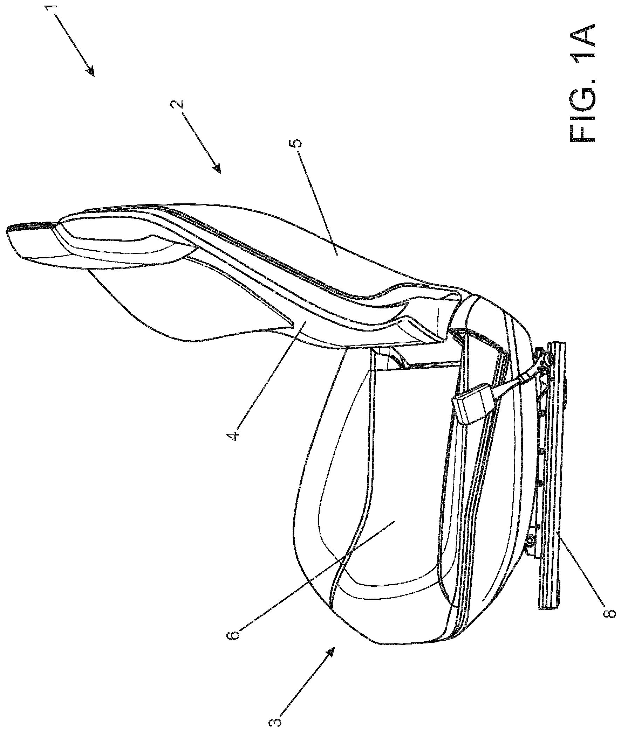

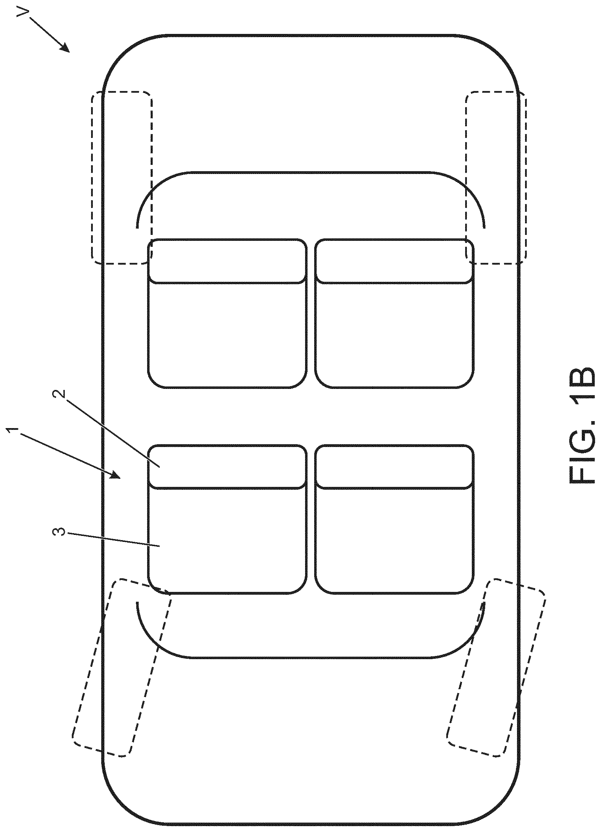

A vehicle seat assembly 1 in accordance with an embodiment of the present invention is shown in Figure 1A. The vehicle seat assembly 1 is for use in an automotive vehicle V, as shown in Figure 1B. It will be appreciated that the vehicle seat assembly 1 may be used in other types of vehicle.

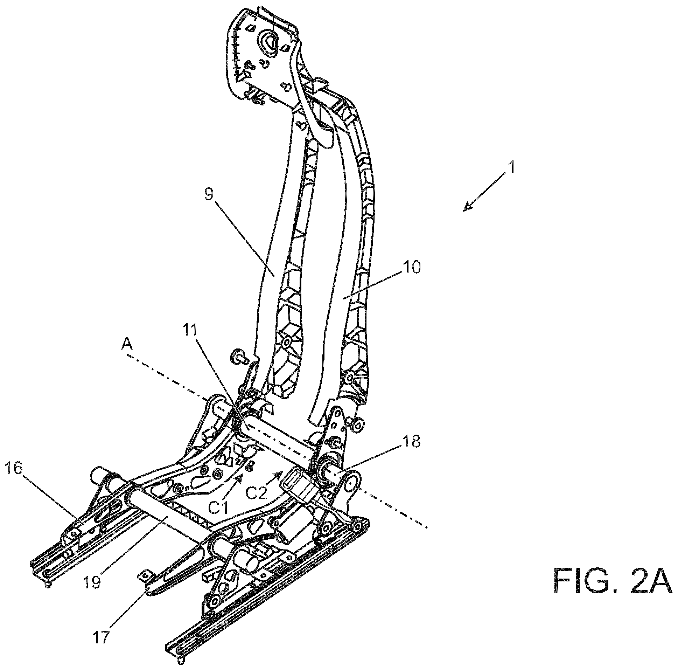

The vehicle seat assembly 1 comprises a squab (backrest) assembly 2 and a base assembly 3. The squab assembly 2 comprises a padded squab 4 mounted to a backrest support 5. The base assembly 3 comprises a seat cushion 6 supported on a seat cushion pan (not shown) mounted to a chassis 7. The squab assembly 2 is pivotally mounted to the base assembly 3 and pivots about a pivot axis A. The pivot axis A is disposed below a H-point of a seat occupant (i.e. below the theoretical location of a pivot point between the torso and upper leg of the seat occupant). The chassis 7 is slidably mounted to a pair of parallel rails 8 fixedly mounted to a floor of the vehicle V. A perspective view of the backrest support 5 and the chassis 7 is shown in Figures 2A-D.

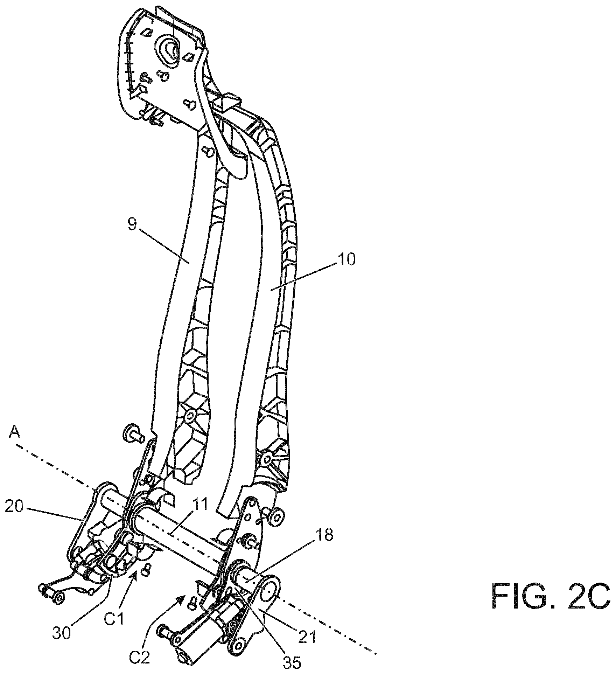

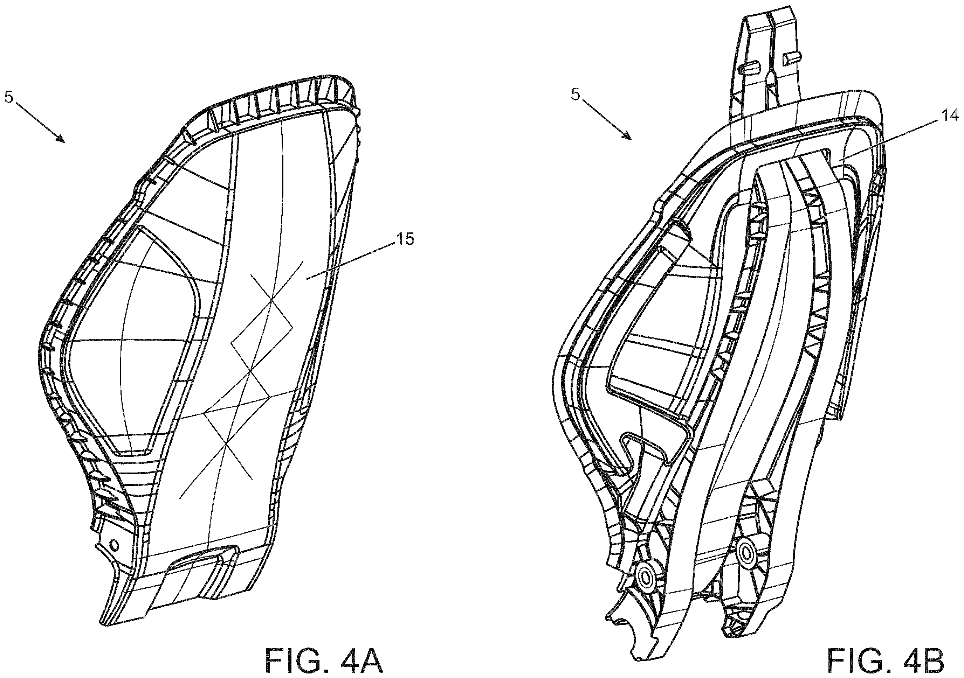

The backrest support 5 comprises first and second beams 9, 10 fixedly mounted to respective ends of a first torsion tube 11. The first and second beams 9, 10 each have an I-section and are moulded from a short-fibre reinforced thermoplastic material. In use, the first and second beams 9, 10 extend generally vertically within the squab assembly 2. As shown in Figures 2A and 2C, the first and second beams 9, 10 are mounted to the first torsion tube 11 by first and second collars C1, C2 each formed from first and second opposing metal brackets having an internal semi-circular section. First and second mounting plates 12, 13 are mounted at the lower end of the first and second beams 9, 10, respectively. The first and second mounting plates 12, 13 are metal plates arranged substantially parallel to each other to support the backrest support 5. The backrest support 5 also comprises a front shell member 14 and a rear shell member 15. The front and rear shell members 14, 15 are moulded from a long-fibre reinforced thermoplastic material and fastened to the respective front and rear surfaces of the first and second beams 9, 10, for example by bonding or thermo-welding. The front and rear shell members 14, 15 thereby form a load-carrying (structural) shell which is integrated with the first and second beams 9, 10. A rear perspective view of the rear shell member 15 is shown in Figure 4A; and a rear perspective of the squab assembly 2 with the rear shell member 15 omitted is shown in Figure 4B.

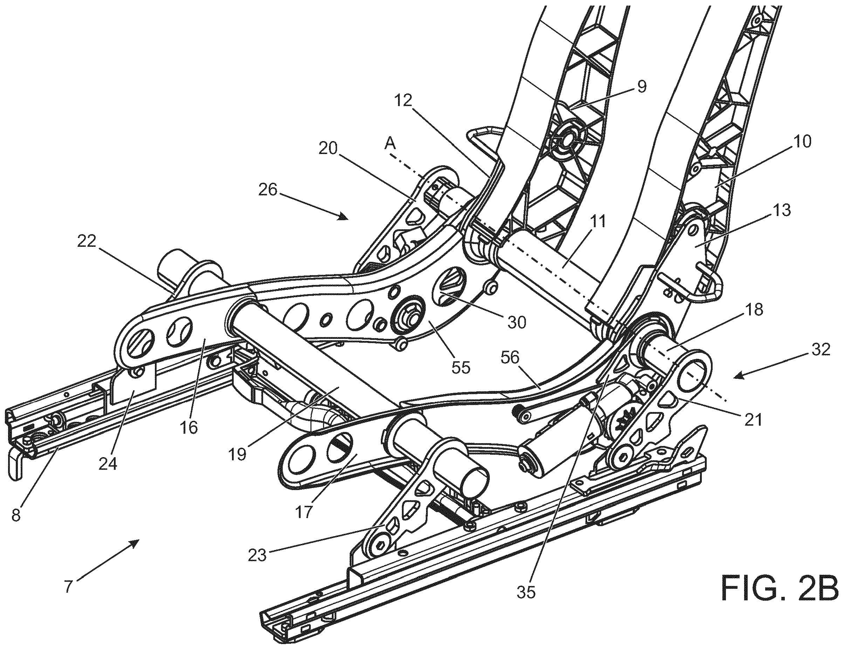

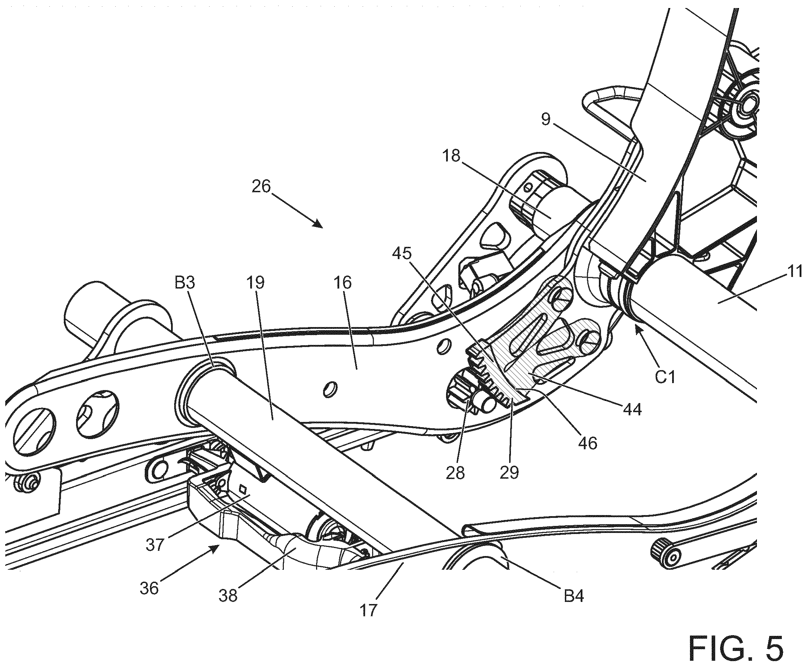

As shown in Figures 2A and 2B, the base assembly 3 comprises opposing first and second lateral members 16, 17, a second torsion tube 18 and a third torsion tube 19. The second torsion tube 18 is rotatably mounted in first and second annular bearings B1, B2 disposed in the first and second lateral members 16, 17. The third torsion tube 19 is rotatably mounted in third and fourth annular bearings B3, B4 (visible in Figure 5) disposed in the first and second lateral members 16, 17. First and second rear mounting arms 20, 21 are fixedly mounted at the respective ends of the second torsion tube 18. Similarly, first and second front mounting arms 22, 23 are fixedly mounted at the respective ends of the third torsion tube 19. The front and rear mounting arms 20-23 are pivotally connected to first and second carrier elements 24, 25 slidably mounted to the rail 8. The first and second lateral members 16, 17, the front and rear mounting arms 20-23, and the first and second carrier elements 24, 25 collectively form first and second four-bar link assemblies on respective sides of the chassis 7. By adjusting the geometry of the four-bar link assemblies, the rise height of the vehicle seat assembly 1 may be adjusted. Thus, the seat cushion 6 may be raised and lowered to suit an individual's preferences.

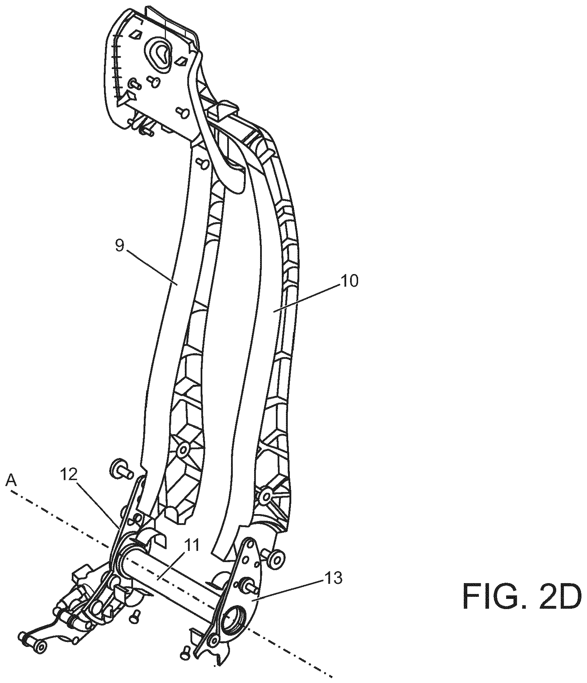

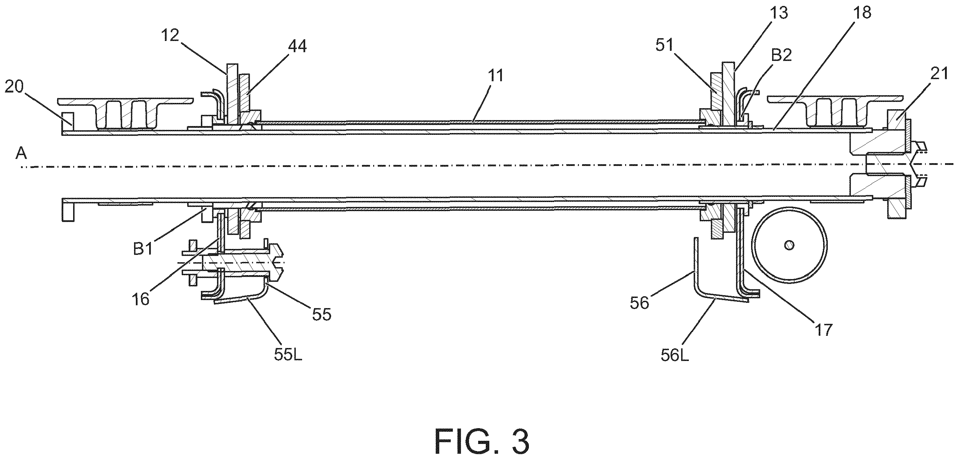

With reference to Figures 2C and 2D, the squab assembly 2 is pivotally mounted to the base assembly 3 to enable adjustment of a recline angle of the squab assembly 2. The squab assembly 2 is pivotable about the pivot axis A. In the present embodiment, the first torsion tube 11 and the second torsion tube 18 are arranged concentrically about the pivot axis A. A transverse sectional view through the first and second torsion tubes 11, 18 is shown in Figure 3. The first and second torsion tubes 11, 18are rotatable independently of each other about the pivot axis A. The first torsion tube 11 is located externally of the second torsion tube 18 to enable the backrest support 5 to pivot relative to the chassis 7.

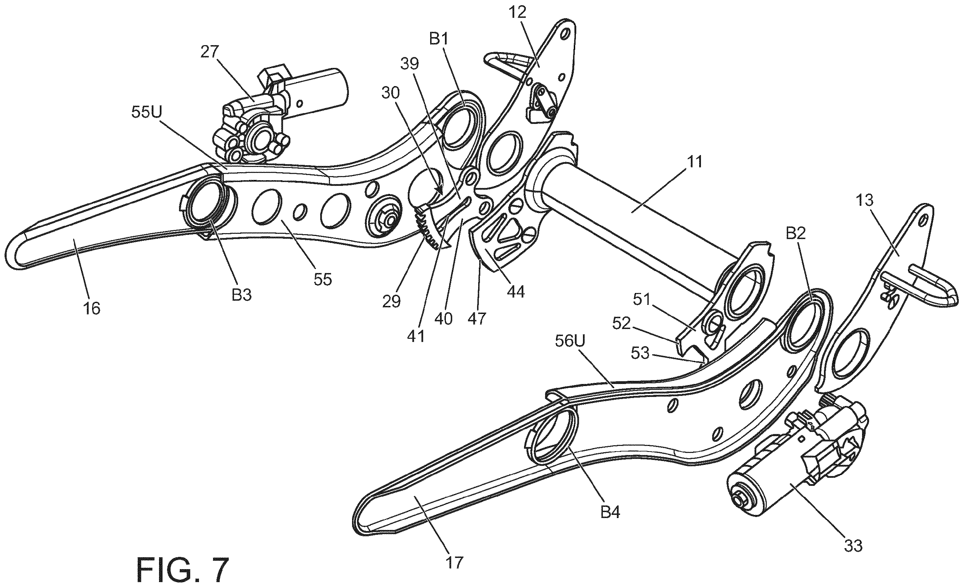

With reference to Figures 5, 6 and 7, the vehicle seat assembly 1 comprises a recline control mechanism 26 for controlling a recline angle of the squab assembly 2. The recline control mechanism 26 comprises a first actuator in the form of a first drive motor 27 (shown in Figure 7). The first drive motor 27 is a reversible electric motor which is controlled in dependence on a control signal received from a seat control unit (not shown). As shown in Figure 7, the first drive motor 27 is mounted to the first lateral member 16 and comprises a first output pinion gear 28 having a toothed profile. The first output pinion gear 28 is configured to engage a first drive rack 29 fixedly mounted to a deformable link 30 connected to the first torsion tube 11. The first drive rack 29 has a part-circular (arcuate) profile having a centre of curvature which is disposed on the pivot axis A. An outer face of the first drive rack 29 defines a series of teeth which mesh with the first output pinion gear 28. The recline angle of the squab assembly 2 is adjustable by controlling operation of the first drive motor 27. The rotation of the first output pinion gear 28 in a first direction increases the recline angle; and the rotation of the first output pinion gear 28 in a second direction reduces the recline angle.

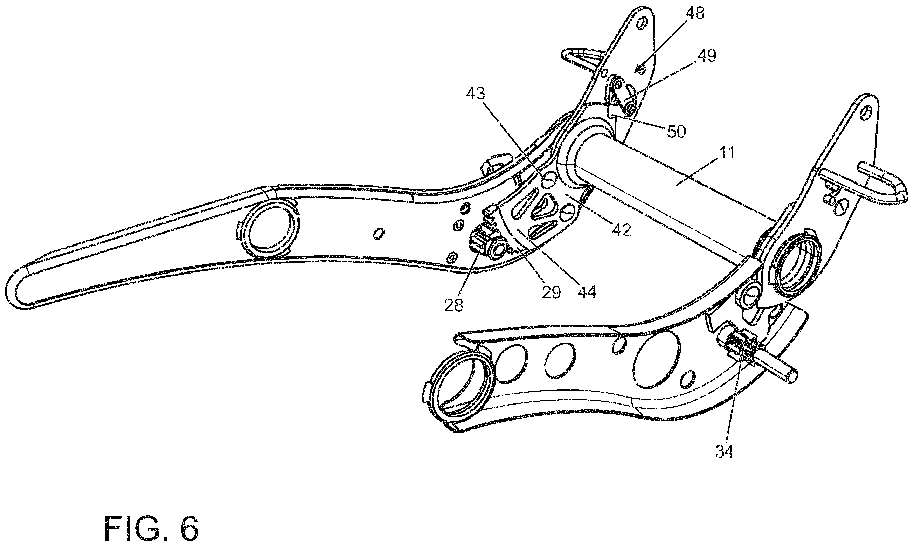

The vehicle seat assembly 1 comprises a rise height control mechanism 32 for controlling a rise height of the base assembly 3. The rise height control mechanism 32 comprises a second actuator in the form of a second drive motor 33 (see Figure 7) is mounted to the second lateral member 17. The second drive motor 33 is a reversible electric motor which is controlled in dependence on a control signal received from the seat control unit (not shown). As shown in Figures 6 and 7, the second drive motor 33 comprises a second output pinion gear 34 having a toothed profile. The second output pinion gear 34 is configured to engage a second drive rack (not shown) fixedly mounted to a drive arm 35. The second drive rack has a part-circular (arcuate) profile having a centre of curvature which is disposed on the pivot axis A. As shown in Figures 2B and 2C, the drive arm 35 is fixedly mounted to the second torsion tube 18. Thus, the second drive motor 33 may be operated to adjust the angle of the first and second rear mounting arms 20, 21; and the angle of the first and second front mounting arms 22, 23. The geometry of the base assembly 3 may thereby be modified to adjust the rise height. The rotation of the second output pinion gear 34 in a first direction increases the rise height of the vehicle seat assembly 1; and the rotation of the second output pinion gear 34 in a second direction reduces the rise height of the vehicle seat assembly 1.

The vehicle seat assembly 1 comprises a travel control mechanism 36 for controlling the longitudinal position of the base assembly 3. As shown in Figure 5, the travel control mechanism 36 comprises a third actuator in the form of a third drive motor 37 mounted to a cross member 38 extending transversely between the first and second carrier elements 24, 25. The third drive motor 37 is a reversible electric motor which is controlled in dependence on a control signal received from the seat control unit (not shown). The third drive motor 37 is operable to adjust a longitudinal travel position of the vehicle seat assembly 1 along the rails 8. The third drive motor 37 may, for example, drive a third output pinion (not shown) which engages a third drive rack (not shown). In this arrangement, the third drive rack may be a linear drive rack fixedly mounted to the rails 8.

The vehicle seat assembly 1 may optionally also include an incline control mechanism for controlling an incline of the base assembly 3. The incline control mechanism is not shown in the present embodiment.

The deformable link 30 is adapted to deform in a controlled manner to absorb energy in the event of a collision. In the present embodiment, the deformable link 30 is a metal plate. The deformable link 30 is rigid (i.e. may not be deformed) upon application of loads up to a design load threshold. Upon application of a load exceeding the design load threshold, the deformable link 30 is configured to undergo progressive plastic deformation. As shown most clearly in Figure 7, the deformable link 30 comprises first and second elongated sections 39, 40 separated by an elongated aperture 41. The first and second elongated sections 39, 40 in the present embodiment have concave outer edges. The profile of the deformable link 30 may be adapted to tune its energy absorption characteristics. As outlined above, the deformable link 30 is connected to the second torsion tube 18. In particular, the deformable link 30 is mounted to a transfer bracket 42 fixedly mounted to a first end of the second torsion tube 18. A pair of bolts 43 mounts the deformable link 30 to the transfer bracket 42. In use, the transfer bracket 42 transmits torque applied by the first output pinion gear 28 to the first torsion tube 11 to adjust the recline angle of the squab assembly 2. The deformable link 30 is disposed adjacent to the first lateral member 16 in a side-by-side configuration. The transfer bracket 42 extends to form a constraining member 44 disposed alongside the deformable link 30. The constraining member 44 may be disposed inboard of the deformable link 30 and extends substantially parallel to the first lateral member 16. The term inboard is used herein to refer to the position in the vehicle seat assembly 1 nearer to a longitudinal centre line of the vehicle V. In use, inhibits or prevents out-of-plane deformation of the deformable link 30, primarily in an inwards direction.

The first drive rack 29 is connected to the deformable link 30. The first drive rack 29 may be formed integrally with the deformable link 30 or may be fixedly mounted thereto, for example by welding. The width of the first drive rack 29 may optionally be greater than that of the deformable link 30 to form a stepped section 45. The first drive rack 29 defines a cooperating surface 46 for cooperating with a reaction surface 47 defined by a leading edge of the constraining member 44. The cooperating surface 46 and the reaction surface 47 have complementary part-circular (arcuate) profiles each having a centre of curvature coincident with the pivot axis A. If the deformable link 30 is deformed, the reaction surface 47 is operative to maintain the first drive rack 29 in engagement with the first output pinion gear 28.

In the present embodiment, the transfer bracket 42 is configured to cooperate with a latching mechanism 48 provided on the first mounting plate 12. The latching mechanism 48 comprises a movable pawl 49 for releasably engaging a detent 50 formed in an upper portion of the transfer bracket 42. The latching mechanism 48 allows the squab assembly 2 to be selectively decoupled from the base assembly 3 to pivot forwards. This decoupling arrangement is typically employed to facilitate ingress to a rear seat of the vehicle V, for example in a coupe body style, but the latching mechanism 48 may be omitted if this functionality is not required. In certain embodiments, a second latching mechanism may be provided on the second mounting plate 13.

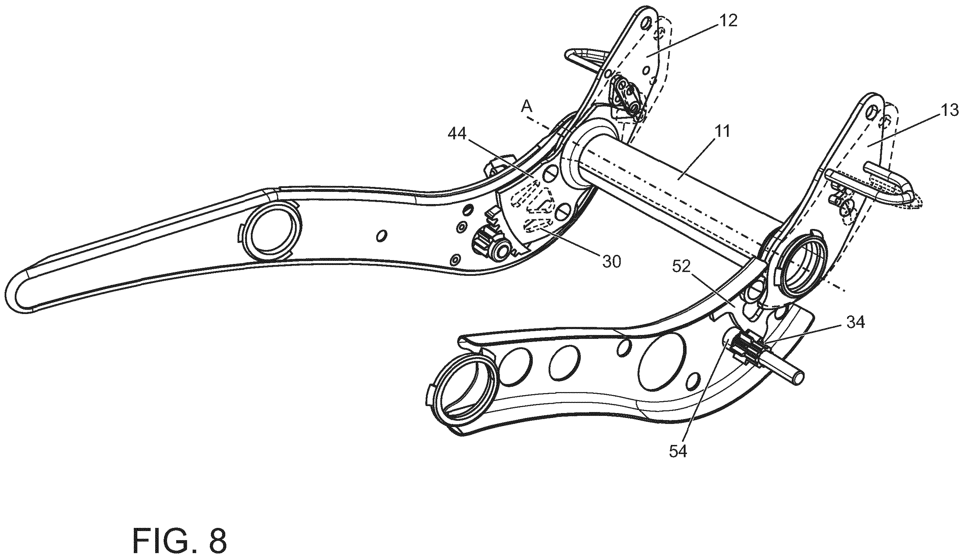

A pivot bracket 51 is fixedly mounted to a second end of the first torsion tube 11 for limiting the pivoting motion of the squab assembly 2. The pivot bracket 51 comprises first and second prongs 52, 53 angularly offset from each other to define a pivot range for the squab assembly 2. As shown most clearly in Figure 8, the first and second prongs 52, 53 locate on diametrically opposed sides of a spindle 54 on which the second output pinion gear 34 is mounted. The first and second prongs 52, 53 remain spaced apart from the spindle 54 in normal use. However, if the deformable link 30 is deformed, one of the first and second prongs 52, 53 may come into contact with the spindle 54 thereby limiting further pivoting movement of the squab assembly 2 in that direction. It will be appreciated therefore that the first and second prongs 52, 53 function as stop members to limit pivoting movement of the squab assembly 2. In certain embodiments, the squab assembly 2 may engage with the second output pinion gear 34 to inhibit rotation thereof and to avoid a drop in the vertical height of the chassis 7.

As shown in Figure 2B, first and second guard members 55, 56 are disposed on the inner sides of the first and second lateral members 16, 17. The first guard member 55 may help to inhibit deformation of the constraining member 44. Alternatively or in addition, the first and second prongs 52, 53 may also contact the respective first and second guard members 55, 56 rather than the spindle 54.

The operation of the vehicle seat assembly 1 will now be described with reference to the figures. In normal use, the first drive motor 27 is operable to adjust the recline angle of the squab assembly 2. The first drive motor 27 drivingly rotates the first output pinion gear 28 which meshes with the first drive rack 29 disposed on the deformable link 30. The resulting rotational movement of the first drive rack 29 rotates the first torsion tube 11 about the pivot axis A. The rotation of the first torsion tube 11 transmits torque to the first mounting plate 12 causing the squab assembly 2 to pivot about the pivot axis A. The first drive motor 27 may be reversed to change the rotational direction of the first output pinion gear 28, thereby enabling the recline angle of the squab assembly 2 to be increased or decreased.

The second drive motor 33 is operable to adjust the rise height of the base assembly 3. The second drive motor 33 drivingly rotates the second output pinion gear 34 which drives the second drive rack causing the drive arm 35 to pivot about the pivot axis A. The resulting rotation of the second torsion tube 18 changes the geometry of the base assembly 3 causing the rise height to increase or decrease depending on the direction of rotation of the second drive motor 33.

The third drive motor 37 is operable to adjust the longitudinal travel of the base assembly 3 along the rails 8.

In the event of a force being applied to the squab assembly 2, for example a collision force resulting from a dynamic collision event, a torque is applied to the first torsion tube 11 resulting in the application of a shear force on the deformable link 30. If the shear force exceeds a threshold level (determined by the configuration of the deformable link 30), the deformable link 30 is predisposed to undergo plastic deformation. The deformation of the deformable link 30 absorbs collision energy rather than transmitting the loads directly into the base assembly 3 by means of the first output pinion gear 28 (thus reducing load on the first output pinion gear 28). Moreover, deformation of the deformable link 30 provides progressive deceleration of the squab assembly 2, thereby helping to reduce the peak loads transmitted to a seat occupant. As described herein, the deformable link 30 is disposed between the first lateral member 16 and the constraining member 44. Thus, deformable link 30 is constrained so as to undergo in-plane deformation. The reaction surface 47 defined by the constraining member 44 cooperates with the cooperating surface 46 to maintain the first drive rack 29 in engagement with the first output pinion gear 28.

The deformable link 30 rotates about the pivot axis A and the arcuate motion is maintained during deformation by the constraining member 44. The deformable link 30 is configured to deform under bending, reaching the yield stress of the materials resulting in localised plastic (permanent) deformation. The cooperating surface 46 cooperates with the reaction surface 47 of the constraining member 44 to maintain the first drive rack 29 in engagement with the first output pinion gear 28. The engagement of these complementary surfaces maintains the distance between the ends of the deformable link 30 helping to prevent the first drive rack 29 disengaging from the first output pinion gear 28. The deformation of the deformable link 30 allows the first torsion tube 11 to rotate about the pivot axis A. Depending on the direction of rotation of the first torsion tube 11 (determined by the direction of the force applied to the squab assembly 2), one of the first and second prongs 52, 53 disposed on the pivot bracket 51 engages the spindle 54 and inhibits further rotation of the first torsion tube 11. The first and second prongs 52, 53 thereby provide functional end stops for limiting angular rotation of the squab assembly 2.

The first and second guard members 55, 56 define end stops for the squab assembly 2. The first guard member 55 has upper and lower first flanges 55U, 55L arranged to cooperate with the deformable link 30 and/or the drive rack 29 and/or the constraining member 44 to limit angular rotation of the squab assembly 2. Similarly, the second guard member 56 has upper and lower second flanges 56U, 56L arranged to cooperate with the outer edges of the first and second prongs 52, 53 to limit angular rotation of the squab assembly 2. It will be appreciated that the angular arrangement of the first and second prongs 52, 53 may define positive and negative lockout angles for the squab assembly 2. The lockout angle may be adjusted to provide a range of +ve and -ve rotation with maximum total angle determining the freedom of the deformable link 30 and/or the drive rack 29 between the upper and lower first flanges 55U, 55L.

The deformable link 30 provides progressive deformation under load. After deformation of the deformable link 30 by a predetermined amount, the upper and lower flanges 55U, 55L, 56U, 56L function as stop members and transmit energy into the remainder of the structure. The deformable link 30 helps to maintain geometrical integrity in strategic locations within the vehicle seat assembly (for example the seat squab for neck and spinal support) whilst allowing controlled deformation in less sensitive areas (for example the chassis 7 under the seat cushion pan and/or in the region proximal to the first and second torsion tubes 11, 18).

The arrangement of the chassis 7 described herein is such that its width may be adjusted with relative ease. Thus, the vehicle seat assembly 1 may be reconfigured to accommodate different widths of seats. For example, the vehicle seat assembly 1 may be reconfigured to suit different sizes of the seat pan.

It will be appreciated that the deformable link 30 may be configured to undergo deformation under a predetermined load. Moreover, the spacing of the first and second prongs 52, 53 may be adjusted to determine the range of rotational movement of the squab assembly 2. It will be appreciated that the pivot bracket 51 may have more than two prongs.

The deformation of the deformable link 30 provides a visual indication that an excessive load has been applied to the vehicle seat assembly 1. This may not otherwise be readily determined by inspection of the squab assembly 2, particularly if the squab assembly 2 incorporates a composite structure. The deformable link 30 may be replaced, for example as a service item. In certain embodiments, the deformable link 30 may be configured such that deformation indicates that the squab assembly 2 should be inspected and/or replaced. The deformable link 30 may optionally comprise one or more mark, for example a series of timing marks, for providing a visual indication that deformation has occurred and optionally also the extent of any such deformation. The one or more mark may be viewed to facilitate determining that deformation had occurred, for example to highlight when the deformable link 30 has undergone only slight deformation. The one or more mark may be visually inspected by removing the first guard member 56. In certain embodiments, the one or more mark may be visible through an aperture (not shown) in the first guard member 56.

The concentric arrangement of the first and second torsion tubes 11, 18 provides packaging advantages and allows the diameter of the torsion tubes 11, 18 to be increased compared to prior art arrangements. At least in certain embodiments, this may provide improved stability and load distribution of the vehicle seat assembly 1, for example in the mounting of the first and second beams 12, 13.

It will be appreciated that various changes and modifications may be made to the vehicle seat assembly 1 described herein without departing from the scope of the attached claims. Alternatives to the deformable link include clamped friction plates configured to slide relative to each other; or twisting of a lever around a friction pivot.

It will be appreciated also that the deformable link 30 described herein may be incorporated into other control functions in the vehicle seat assembly 1, For example, the deformable link may be disposed between the second torsion tube 18 and the second output pinion gear 34. A second drive rack may be associated with the second output pinion gear 34. In this arrangement, the deformable link would be integrated into the height rise function.

## Claims

1. A vehicle seat assembly (1) comprising:
a backrest support (5) comprising a first torsion tube (11) for adjusting a recline angle; and
a chassis (7) comprising a second torsion tube (18) for adjusting height rise;
wherein the first and second torsion tubes (11, 18) are arranged concentrically about a pivot axis (A).

2. A vehicle seat assembly (1) as claimed in claim 1, wherein the first and second torsion tubes (11, 18) are rotatable independently of each other about said pivot axis (A).

3. A vehicle seat assembly (1) as claimed in claim 1 or claim 2, wherein the second torsion tube (18) is disposed inside the first torsion tube (11).

4. A vehicle seat assembly (1) as claimed in any one of claims 1, 2 or 3, wherein the first torsion tube (11) is rotatable about the pivot axis (A) to adjust the recline angle.

5. A vehicle seat assembly (1) as claimed in any one of the preceding claims, wherein the backrest support (5) comprises at least one mounting plate (12, 13); the first torsion tube (11) being fixedly connected to said at least one mounting plate (12, 13).

6. A vehicle seat assembly (1) as claimed in any one of the preceding claims comprising a first actuator (27) for rotating the first torsion tube (11) about said pivot axis.

7. A vehicle seat assembly (1) as claimed in claim 6, wherein a transfer arm (42) is fixedly mounted to the first torsion tube (11), the first actuator (27) drivingly engaging the transfer arm (42).

8. A vehicle seat assembly (1) as claimed in claim 7, wherein the transfer arm (42) is connected to a drive rack (29) which engages a first output pinion (28) coupled to the actuator.

9. A vehicle seat assembly (1) as claimed in claim 7 or claim 8, wherein the transfer arm (42) comprises a deformable link (30).

10. A vehicle seat assembly (1) as claimed in any one of the preceding claims, wherein the second torsion tube (18) is rotatable about the pivot axis (A) to adjust the rise height.

11. A vehicle seat assembly (1) as claimed in any one of the preceding claims, wherein the chassis (7) comprises first and second rear mounting arms (20, 21); the second torsion tube (18) being fixedly connected to at least one of said first and second rear mounting arms (20, 21).

12. A vehicle seat assembly (1) as claimed in any one of the preceding claims comprising a second actuator (33) for rotating the second torsion tube (18) about the pivot axis.

13. A vehicle seat assembly (1) as claimed in claim 12, wherein the second actuator (33) is mounted to the chassis.

14. A vehicle seat assembly (1) as claimed in any of claims 6 to 13 when dependent on at least one of claims 6 to 12, wherein at least one of the first actuator (27) and the second actuator (33) comprises an electric drive motor.

15. A vehicle (V) comprising at least one vehicle seat assembly (1) as claimed in any one of the preceding claims.

## Patentansprüche

1. Fahrzeugsitzanordnung (1), Folgendes umfassend:
einen Rückenlehnenträger (5), umfassend ein erstes Torsionsrohr (11) zum Einstellen eines Neigungswinkels; und
ein Fahrgestell (7), umfassend ein zweites Torsionsrohr (18) zum Einstellen einer Höhenzunahme;
wobei das erste und das zweite Torsionsrohr (11, 18) konzentrisch um eine Schwenkachse (A) herum eingerichtet sind.

2. Fahrzeugsitzanordnung (1) nach Anspruch 1, wobei das erste und das zweite Torsionsrohr (11, 18) unabhängig voneinander um die Schwenkachse (A) herum drehbar sind.

3. Fahrzeugsitzanordnung (1) nach Anspruch 1 oder 2, wobei das zweite Torsionsrohr (18) inwendig des ersten Torsionsrohrs (11) angeordnet ist.

4. Fahrzeugsitzanordnung (1) nach einem der Ansprüche 1, 2 oder 3, wobei das erste Torsionsrohr (11) um die Schwenkachse (A) herum drehbar ist, um den Neigungswinkel einzustellen.

5. Fahrzeugsitzanordnung (1) nach einem der vorhergehenden Ansprüche, wobei der Rückenlehnenträger (5) wenigstens eine Befestigungsplatte (12, 13) umfasst;
das erste Torsionsrohr (11) fest mit der wenigstens einen Befestigungsplatte (12, 13) verbunden ist.

6. Fahrzeugsitzanordnung (1) nach einem der vorhergehenden Ansprüche, umfassend einen ersten Aktuator (27) zum Drehen des ersten Torsionsrohrs (11) um die Schwenkachse herum.

7. Fahrzeugsitzanordnung (1) nach Anspruch 6, wobei ein Übergabearm (42) fest an dem ersten Torsionsrohr (11) befestigt ist, wobei der erste Aktuator (27) den Übergabearm (42) antreibend in Eingriff nimmt.

8. Fahrzeugsitzanordnung (1) nach Anspruch 7, wobei der Übergabearm (42) mit einem Zahnstrangenanstrieb (29) verbunden ist, der ein erstes Ausgaberitzel (28), das mit dem Aktuator verbunden ist, in Eingriff nimmt.

9. Fahrzeugsitzanordnung (1) nach Anspruch 7 oder 8, wobei der Übergabearm (42) ein verformbares Verbindungsglied (30) umfasst.

10. Fahrzeugsitzanordnung (1) nach einem der vorhergehenden Ansprüche, wobei das zweite Torsionsrohr (18) um die Schwenkachse (A) herum drehbar ist, um die Zunahmenhöhe einzustellen.

11. Fahrzeugsitzanordnung (1) nach einem der vorhergehenden Ansprüche, wobei das Fahrgestell (7) einen ersten und einen zweiten hinteren Befestigungsarm (20, 21) umfasst;
das zweite Torsionsrohr (18) fest mit dem ersten und/oder dem zweiten hinteren Befestigungsarm (20, 21) verbunden ist.

12. Fahrzeugsitzanordnung (1) nach einem der vorhergehenden Ansprüche, umfassend einen zweiten Aktuator (33) zum Drehen des zweiten Torsionsrohrs (18) um die Schwenkachse herum.

13. Fahrzeugsitzanordnung (1) nach Anspruch 12, wobei der zweite Aktuator (33) an dem Fahrgestell befestigt ist.

14. Fahrzeugsitzanordnung (1) nach einem der Ansprüche 6 bis 13, wenn abhängig von wenigstens einem der Ansprüche 6 bis 12, wobei der erste Aktuator (27) und/oder der zweite Aktuator (33) einen Elektroantriebsmotor umfasst.

15. Fahrzeug (V), umfassend wenigstens eine Fahrzeugsitzanordnung (1) nach einem der vorhergehenden Ansprüche.

## Revendications

1. un ensemble de siège de véhicule (1) comprenant :
un support de dossier (5) comprenant un premier tube de torsion (11) pour régler un angle d'inclinaison ;
et
un châssis (7) comprenant un second tube de torsion (18) pour régler la hauteur de montée ;
dans laquelle les premier et second tubes de torsion (11, 18) sont disposés concentriquement autour de
un axe de pivotement (A).

2. Assemblage de siège de véhicule (1) selon la revendication 1, dans lequel les premier et second tubes de torsion (11, 18) peuvent tourner indépendamment l'un de l'autre autour dudit axe de pivotement (A).

3. Assemblage de siège de véhicule (1) selon la revendication 1 ou 2, dans lequel le deuxième tube de torsion (18) est disposé à l'intérieur du premier tube de torsion (11).

4. Assemblage de siège de véhicule (1) selon l'une quelconque des revendications 1, 2 ou 3, dans lequel le premier tube de torsion (11) peut tourner autour de l'axe de pivotement (A) pour ajuster l'angle d'inclinaison.

5. Ensemble de siège de véhicule (1) tel que revendiqué dans l'une quelconque des revendications précédentes, dans lequel
le support de dossier (5) comprend au moins une plaque de montage (12, 13) ; le premier tube de torsion
(11) étant relié de façon fixe à ladite au moins une plaque de montage (12, 13).

6. Assemblage de siège de véhicule (1) tel que revendiqué dans l'une quelconque des revendications précédentes comprenant un premier actionneur (27) pour faire tourner le premier tube de torsion (11) autour dudit axe de pivotement.

7. Assemblage de siège de véhicule (1) selon la revendication 6, dans lequel un bras de transfert (42) est monté de manière fixe sur le premier tube de torsion (11), le premier actionneur (27) engageant le bras de transfert (42) par entraînement.

8. Assemblage de siège de véhicule (1) selon la revendication 7, dans lequel le bras de transfert (42) est relié à une crémaillère d'entraînement (29) qui engage un premier pignon de sortie (28) couplé à l'actionneur.

9. Ensemble de siège de véhicule (1) selon la revendication 7 ou la revendication 8, dans lequel le bras de transfert
(42) comprend une liaison déformable (30).

10. Assemblage de siège de véhicule (1) selon l'une quelconque des revendications précédentes, dans lequel le deuxième tube de torsion (18) peut tourner autour de l'axe de pivotement (A) pour régler la hauteur de montée.

11. Assemblage de siège de véhicule (1) tel que revendiqué dans l'une quelconque des revendications précédentes, dans lequel le châssis (7) comprend des premier et second bras de montage arrière (20, 21) ; le second tube de torsion (18) étant relié de manière fixe à au moins un desdits premier et second bras de montage arrière (20, 21).

12. Assemblage de siège de véhicule (1) tel que revendiqué dans l'une quelconque des revendications précédentes comprenant un second actionneur (33) pour faire tourner le second tube de torsion (18) autour de l'axe du pivot.

13. Ensemble de siège de véhicule (1) selon la revendication 12, dans lequel le second actionneur (33) est monté sur le châssis .

14. Assemblage de siège de véhicule (1) selon l'une quelconque des revendications 6 à 13 lorsqu'il dépend d'au moins l'une des revendications 6 à 12, dans lequel au moins un des premier et second actionneurs (27)
(33) comprend un moteur d'entraînement électrique.

15. Véhicule (V) comprenant au moins un ensemble de siège de véhicule (1) comme indiqué dans l'une quelconque des revendications précédentes.
